## Europäisches Patentamt
## European Patent Office
## Office européen des brevets

(19)

(11) Veröffentlichungsnummer: **0 142 809**
**B1**

(12) **EUROPÄISCHE PATENTSCHRIFT**

(45) Veröffentlichungstag der Patentschrift:
18.03.87

(21) Anmeldenummer: 84113639.3

(22) Anmeldetag: 12.11.84

(51) Int. Cl.⁴: **H 02 M 1/12**

(54) Schaltnetzgerät.

(30) Priorität: 14.11.83 DE 3341157

(43) Veröffentlichungstag der Anmeldung:
29.05.85 Patentblatt 85/22

(45) Bekanntmachung des Hinweises auf die Patenterteilung:
18.03.87 Patentblatt 87/12

(84) Benannte Vertragsstaaten:
DE FR GB IT

(56) Entgegenhaltungen:
DE-A-2 534 414

(73) Patentinhaber: Siemens Aktiengesellschaft Berlin und München, Wittelsbacherplatz 2, D-8000 München 2 (DE)

(72) Erfinder: Lang, Bernhard, Paula- Modersohn-Strasse 8, D-7500 Karlsruhe 41 (DE)

LIBER, STOCKHOLM 1987

EP 0 142 809 B1

## Beschreibung

Die Erfindung bezieht sich auf ein Schaltnetzgerät gemäß dem Oberbegriff des Anspruchs 1.

Bei einem bekannten Schaltnetzgerät, das eine getaktete Stromversorgung für ein elektrisches Gerät mit einer über die Steuerschaltung vorgebbaren Spannung darstellt, wird die Netzwechselspannung über ein Filter der Gleichrichterschaltung zugeführt. Die gleichgerichtete Spannung wird mit einem Kondensator geglättet und gelangt über einen als Transistor ausgeführten Schalter an die Primärwicklung eines Übertragers. Die Steuerschaltung betätigt den Schalter mit einer Frequenz, die um Größenordnungen höher als die Netzfrequenz ist (typisch 10 kHz bis 400 kHz). Die transformierte Wechselspannung wird gleichgerichtet, mit einem weiteren Kondensator geglättet und steht am Lastwiderstand als Ausgangsspannung zur Verfügung. Wird das Schaltnetzteil an das Wechselspannungsnetz angeschlossen, so kann der Ladestrom des ersten Kondensators leicht einige 100 A betragen, wodurch sowohl das Filter als auch der Gleichrichter als auch der weitere Kondensator zerstört werden können. Ebenfalls können weitere Bauelemente wie Netzschalter und Netzsicherungen durch den Einschaltstromstoß beschädigt werden.

Zum sicheren Betrieb von Schaltnetzteilen ist daher eine Einrichtung zur Begrenzung des Einschaltstromes erforderlich. Bei den bekannten Schaltnetzteilen ist daher in Serie zum Gleichrichter ein Strombegrenzungswiderstand angeordnet. Parallel hierzu liegt der Arbeitskontakt eines Relais. Die Wicklung des Relais ist über einen Vorwiderstand parallel zum ersten Glättungskondensator geschaltet. Der Vorwiderstand ist so bemessen, daß das Relais erst dann anzieht, wenn der Ladevorgang des Kondensators beendet ist. Der Relaiskontakt überbrückt dann den Vorwiderstand. Nachteilig sind bei dieser bekannten Anordnung der Verschleiß der mechanischen Teile und der Kontakte des Relais sowie die Verlustleistung, die im Vorwiderstand und der Relaiswicklung entsteht.

Bei einer weiteren bekannten Anordnung zur Begrenzung des Einschaltstromes wird dieser auch durch einen Vorwiderstand begrenzt, jedoch ist parallel zu dem Vorwiderstand ein Thyristor angeordnet, dessen Zündelektrode mit einer Spannung angesteuert wird, die mit dem beschriebenen Übertrager und durch Gleichrichtung gewonnen wird. Im Einschaltmoment wird bei dieser Anordnung der Einschaltstrom durch den Vorwiderstand begrenzt, da der Thyristor hochohmig ist. Wird mittels der Steuerschaltung der Schalttransistor angesteuert, dann wird im Übertrager eine Wechselspannung induziert, die nach Gleichrichtung und Siebung über einen Vorwiderstand der Zündelektrode des Thyristors zugeführt wird. Der Thyristor zündet, wird damit niederohmig und überbrückt im stationären Betrieb des Schaltnetzteils somit den Vorwiderstand. Die Nachteile dieser Anordnung bestehen einmal in dem beträchtlichen Bauelementeaufwand sowie in den Störspannungen, die beim Schalten des Thyristors entstehen.

Der Erfindung liegt die Aufgabe zugrunde, ein Schaltnetzteil zu schaffen, bei dem eine Zerstörung durch eventuell zu hohe Einschaltströme dauerhaft vermieden und die Entstehung von Störspannungen weitgehend verhindert ist.

Zur Lösung dieser Aufgabe weist ein Schaltnetzgerät der eingangs genannten Art erfindungsgemäß die Merkmale des Kennzeichens des Anspruchs 1 auf.

Mit dem Schaltnetzgerät gemäß der Erfindung ist in vorteilhafter Weise der Ausfall von getakteten Stromversorgungen, die im Einschaltmoment durch hohe Einschaltströme zerstört werden können, verhindert. Außerdem vermindert die erfindungsgemäße Schutzschaltung die Ausbreitung elektrischer Störungen, die beim Betrieb von Schaltnetzteilen in jedem Fall durch die Taktung auftreten können.

Diese vorteilhafte Wirkung wird in erster Linie durch den magnetisch steuerbaren Widerstand, der sich räumlich im Einflußbereich des Magnetfeldes der Induktivität, z. B. der Erregerspule, befindet, erreicht. Im Einschaltmoment wird durch den ansteigenden Einschaltstrom in der Spule ein ansteigendes Magnetfeld erzeugt, das eine Vergrößerung des ohmschen Widerstandes des magnetisch steuerbaren Widerstandes bewirkt, wodurch das Anwachsen des Stromes begrenzt wird. Gleichzeitig vermindert der Scheinwiderstand der Spule die Ausbreitung der im Schaltnetzteil durch die Taktung erzeugten hochfrequenten Störungen in das Wechselspannungsnetz.

Vorteilhafte Ausführungsformen des erfindungsgemäßen Schaltnetzgeräts sind in den Unteransprüchen 2 bis 10 angegeben.

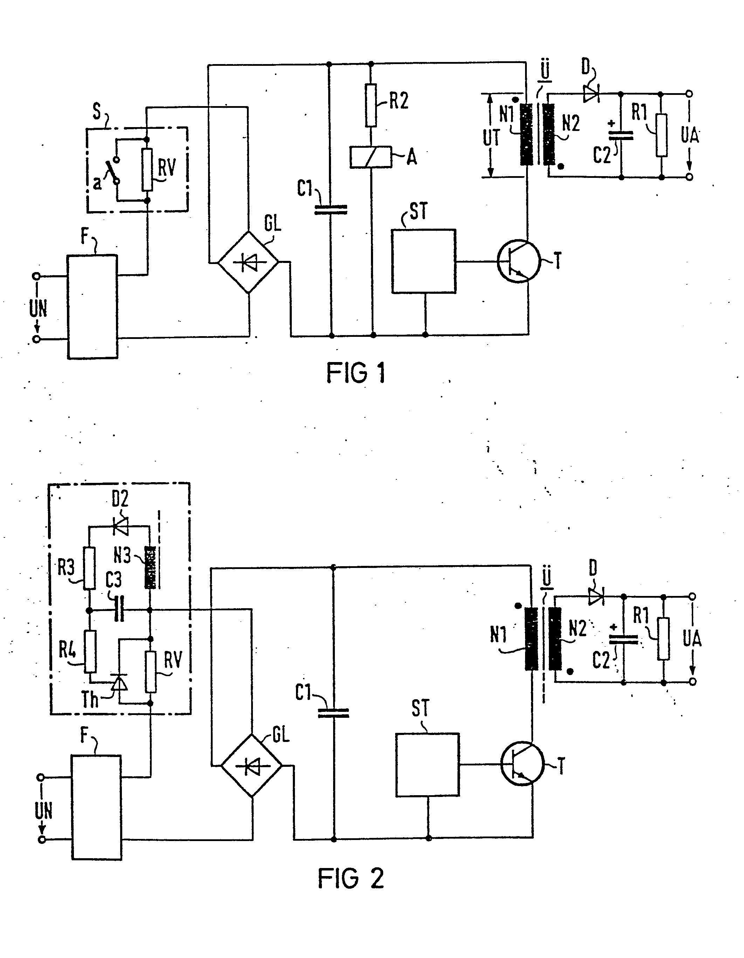

Die Erfindung wird anhand der Figuren erläutert, wobei Figur 1 ein erstes aus dem Stand der Technik bekanntes Schaltnetzgerät,

Figur 2 ein zweites aus dem Stand der Technik bekanntes Schaltnetzgerät,

Figur 3 ein Ausführungsbeispiel des erfindungsgemäßen Schaltnetzgeräts,

Figur 4 eine Kennlinie des magnetisch steuerbaren Widerstandes,

Figur 5 ein zweites Ausführungsbeispiel einer Schutzschaltung des erfindungsgemäßen Schaltnetzgeräts,

Figur 6 ein drittes Ausführungsbeispiel einer solchen Schutzschaltung,

Figur 7 ein konstruktives Ausführungsbeispiel einer Reihenschaltung aus Erregerspule und magnetisch steuerbarem Widerstand,

Figur 8 eine bevorzugte konstruktive Gestaltung des magnetisch steuerbaren Widerstandes,

Figur 9 eine weitere Gestaltungsmöglichkeit des magnetisch steuerbaren Widerstandes und

Figur 10 eine besondere Herstellungsform des magnetisch steuerbaren Widerstandes nach Figur 9 darstellt.

Das Prinzipschaltbild einer getakteten Stromversorgung mit einem bekannten Schaltnetzgerät ist in Figur 1 dargestellt. Die Netzwechselspannung an Klemmen KL1 und KL2 wird über ein Filter F einem Gleichrichter GL zugeführt. Die gleichgerichtete Spannung wird mit einem Glättungskondensator C1 geglättet und gelangt über einen mit einem Transistor T ausgeführten Schalter an die Primärwicklung N1 eines Übertragers Ü. Eine Steuerschaltung ST betätigt den Schalter mit einer Frequenz, die um Größenordnungen höher als die Netzfrequenz ist (beispielsweise 10 kHz bis 400 kHz). Die transformierte Wechselspannung an der Wicklung N2 wird mit einer Diode D gleichgerichtet, einem weiteren Kondensator C2 geglättet und steht am Lastwiderstand R1 als Ausgangsspannung UA zur Verfügung. Würde das Schaltnetzteil in der bis jetzt beschriebenen Ausgestaltung an das Wechselspannungsnetz angeschlossen, so kann der Ladestrom des Kondensators C1 leicht einige 100 A betragen, wodurch sowohl das Filter F, der Gleichrichter GL als auch der Glättungskondensator C1 zerstört werden können. Ebenfalls können in der Figur 1 nicht dargestellte Bauelemente wie Netzschalter und Netzsicherungen durch den Einschaltstromstoß beschädigt werden. Zum sicheren Betrieb des Schaltnetzgeräts ist daher eine Einrichtung zur Begrenzung des Einschaltstromes erforderlich. Im bekannten Ausführungsbeispiel nach der Figur 1 ist daher weiterhin eine bekannte Anordnung zur Begrenzung des Einschaltstromes vorhanden. In Serie zum Gleichrichter GL ist ein Strombegrenzungswiderstand bzw. Vorwiderstand RV angeordnet. Parallel zu RV liegt der Arbeitskontakt a eines Relais A. Die Wicklung des Relais A ist über einen Widerstand R2 parallel zum Glättungskondensator C1 geschaltet. Der Widerstand R2 ist so bemessen, daß das Relais erst dann anzieht, wenn der Ladevorgang des Kondensators C1 beendet ist. Der Relaiskontakt a überbrückt dann den Vorwiderstand RV. Bei dieser bekannten Anordnung treten sowohl ein mechanischer Verschleiß der Relaisteile sowie eine Verlustleistung durch die Relaiswicklung und R2 auf.

Eine weitere bekannte Anordnung zur Begrenzung des Einschaltstromes ist in Figur 2 dargestellt, in der alle mit der Figur 1 übereinstimmenden Bauelemente mit gleichen Bezugszeichen versehen sind. Der Einschaltstrom wird auch in dieser Anordnung durch den Vorwiderstand RV begrenzt. Parallel zu RV ist ein Thyristor Th angeordnet, dessen Zündelektrode mit einer Spannung angesteuert wird, die mittels einer Wicklung N3 auf dem Übertrager Ü, einer Diode D2 und einem Siebglied R3, C3 gewonnen wird. Im Einschaltmoment wird auch in der Anordnung nach Figur 2 der Einschaltstrom durch den Widerstand RV begrenzt, da der Thyristor Th hochohmig ist. Wird mittels der Steuerschaltung ST der Schalttransistor T angesteuert, dann wird in N3 eine Wechselspannung induziert, die nach Gleichrichtung und Siebung über einen Vorwiderstand R4 der Zündelektrode des Thyristors Th zugeführt wird. Der Thyristor Th zündet, wird damit niederohmig und überbrückt im stationären Betrieb des Schaltnetzteils den Vorwiderstand RV. Die Nachteile der Anordnung nach Figur 2 bestehen einmal in dem beträchtlichen Bauelementeaufwand sowie in der zusätzlichen Störspannung, die beim Schalten des Thyristors Th entsteht.

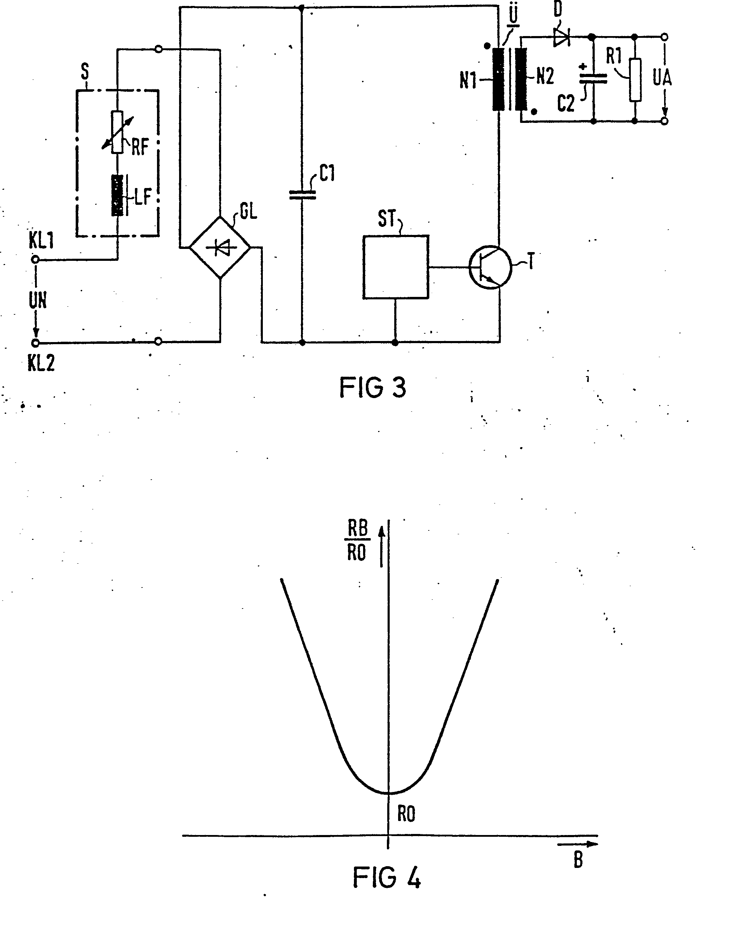

Ein Ausführungsbeispiel der erfindungsgemäßen Anordnung ist in der Figur 3 dargestellt. Zwischen einer Eingangsklemme KL1 und dem Gleichrichter GL ist hier die Reihenschaltung der Erregerspule LF als Induktivität mit dem Widerstand RF als ein magnetisch steuerbarer Widerstand angeordnet, der sich räumlich im Einflußbereich des Magnetfeldes der Erregerspule LF befindet. Die Kennlinie des magnetisch steuerbaren Widerstandes RF ist im Diagramm nach der Figur 4 dargestellt, in der das Verhältnis der Widerstandswerte RB (Widerstand im Magnetfeld) zu RO (Widerstand ohne Magnetfeld) über der magnetischen Induktion B aufgetragen ist. Im Einschaltmoment wird durch den ansteigenden Einschaltstrom in der Erregerspule LF ein ansteigendes Magnetfeld erzeugt, das eine Vergrößerung des Widerstandswertes von RF bewirkt, wodurch das Anwachsen des Stromes in das Schaltnetzgerät hinein begrenzt wird. Gleichzeitig vermindert der Scheinwiderstand der Erregerspule LF die Ausbreitung der im Schaltnetzteil erzeugten hochfrequenten Störungen in das Wechselspannungsnetz.

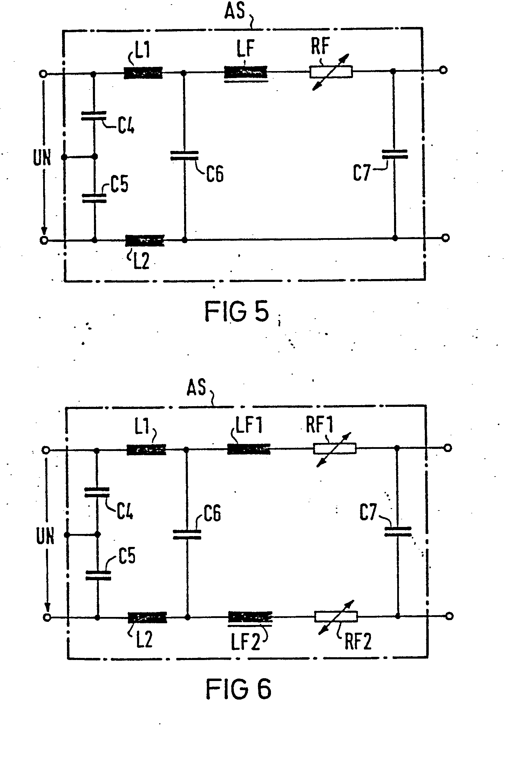

Die Figur 5 zeigt, wie bei einer solchen Schutzschaltung S durch Hinzufügen von Spulen L1, L2 und Kondensatoren C4 ... C7 zu der Erregerspule LF und dem steuerbaren Widerstand RF ein hochleistungsfähiges, breitbandiges Entstörfilter aufgebaut wird, das ebenfalls den Einschaltstrom des nachgeschalteten Verbrauchers (hier des Schaltnetzgerätes) im Zusammenhang mit einer Abschirmung AS wirksam begrenzt.

In der Figur 6 ist ein weiteres Ausführungsbeispiel der Schutzschaltung S dargestellt. Durch Hinzufügen einer Erregerspule LF2 mit einem Widerstand RF2 zu der Anordnung nach Figur 3 wird eine hochwirksame Unterdrückung auch symmetrischer Störkomponenten bei gleichzeitiger Begrenzung des Einschaltstromes erreicht.

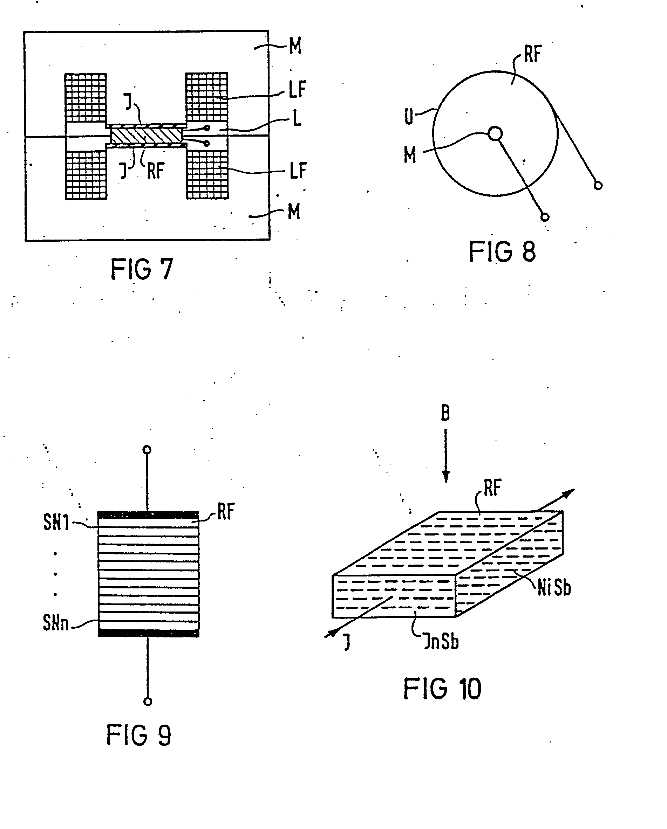

Der magnetisch steuerbare Widerstand RF kann, wie in Figur 7 dargestellt, im Luftspalt L des als Topfkern ausgebildeten magnetischen Kreises M mit der innen aufgebrachten Erregerspule LF angeordnet sein. Zwischen dem magnetisch steuerbaren Widerstand RF und dem Magnetjoch sind isolierende Zwischenlagen I angeordnet. Um einen guten Wärmeübergang von RF zum Topfkern bei gleichzeitig hoher Isolation zu gewährleisten, sind Werkstoffe wie Glimmer oder glasfaserverstärktes Silikonkautschuk für die Zwischenlagen I vorteilhaft verwendbar.

Als Werkstoff für den magnetisch steuerbaren Widerstand RF ist ein Material mit hoher Elektronenbeweglichkeit vorzusehen, wie beispielsweise die halbleitenden Verbindungen der III. und V. Gruppe des periodischen Systems der Elemente wie Indiumantimonid, Galliumarsenid usw.

Die Formgebung des Widerstandes RF ist ebenfalls für die gewünschten Eigenschaften, wie hoher Widerstandszunahme im Magnetfeld bei hoher Strombelastbarkeit, entscheidend. So ist gemäß Figur 8 vorgesehen, daß der Widerstand RF als Scheibe ausgebildet wird, mit einem Anschluß im Mittelpunkt M der Scheibe und einem weiteren Anschluß am Umfang U der Scheibe (Corbino-Scheibe).

Besitzt der Arbeitsluftspalt des magnetischen Kreises M jedoch einen quadratischen oder rechteckigen Querschnitt, wie z. B. bei E- oder M-Jochen, so ist eine rechteckige oder quadratische Form des magnetisch steuerbaren Widerstandes RF vorteilhaft, wobei entweder gut leitende Streifen SN1... SNn senkrecht zur Stromrichtung und dem Magnetfeld angebracht werden - siehe Figur 9 - oder Nickelantimonid-Nadeln (NiSb) eutektisch senkrecht zur Stromrichtung und zum Magnetfeld B in einem Indiumantimonid-Körper (InSb) abgeschieden werden - siehe Figur 10 -.


**Patentansprüche**

1. Schaltnetzgerät mit
- einer vom Wechselspannungsnetz gespeisten Gleichrichterschaltung (GL) mit nachgeordnetem Glättungskondensator (C1),
- einer Übertrageranordnung, an der eingangsseitig die gleichgerichtete, von einer Steuerschaltung (ST) getaktete Spannung (UT) und ausgangsseitig nach einer erneuten Gleichrichtung die geforderte Ausgangsspannung (UA) anliegt, und mit
- einer zwischen Wechselspannungsnetz und Gleichrichterschaltung (GL) angeordneten Schutzschaltung (S) zur Begrenzung des ladestomes für den Glättungskondensator dadurch gekennzeichnet, daß
- die Schutzschaltung (S) aus mindestens einer Reihenschaltung von mindestens einer Induktivität (L1, L2; LF; LF1, LF2) und mindestens einem magnetisch steuerbaren Widerstand (RF; RF1, RF2) besteht und
- diese Reihenschaltung im Bereich mindestens einer der Klemmen (KL1, KL2) des Wechselspannungsnetzes oder zwischen der Gleichrichterschaltung (GL) und dem Kondensator (C1) angeordnet ist und daß
- der eine magnetisch steuerbare Widerstand (RF; RF1, RF2) vom Magnetfeld der in der gleichen Reihenschaltung befindlichen Induktivität (LF; LF1, LF2) hinsichtlich seines Widerstandswertes beeinflußbar ist.

2. Schaltnetzgerät nach Anspruch 1, dadurch gekennzeichnet, daß die Induktivität aus mindestens einer Reihenschaltung besteht, die in Richtung vom Wechselspannungsnetz zur Gleichrichterschaltung (GL) aus einer ersten Spule (L1, L2) und einer Erregerspule (LF; LF1, LF2) für den magnetisch steuerbaren Widerstand (RF; RF1, RF2) gebildet ist.

3. Schaltnetzgerät nach Anspruch 2, dadurch gekennzeichnet, daß
-auch in dem Fall, in dem nur im Bereich einer Klemme (KL1, KL2) des Wechselspannungsnetzes die Reihenschaltung angeordnet ist, sich auch im Bereich der jeweils anderen Klemme eine erste Spule (L2) befindet und daß
-in Richtung zur Gleichrichterschaltung (GL) vor der Reihenschaltung aus Erregerspule (LF; LF1, LF2) und magnetisch steuerbarem Widerstand (RF; RF1, RF2) ein Kondensator (C6) und dahinter ein weiterer Kondensator (C7) zwischen den Adern der Schutzschaltung (S) angeordnet ist (Figur 5 und 6).

4. Schaltnetzgerät nach einem der Ansprüche 1 bis 3, dadurch gekennzeichnet, daß
-in der Schutzschaltung (S) im Bereich der Anschlüsse des Wechselspannungsnetzes eine Reihenschaltung aus zwei Kondensatoren (C4, C5) die beiden Anschlüsse überbrückt, deren gemeinsamer Verbindungspunkt an eine Abschirmung (AS) eines Gehäuses der Schutzschaltung (S) bzw. an den Schutzleiter des Wechselspannungsnetzes gelegt ist.

5. Schaltnetzgerät nach einem der vorhergehenden Ansprüche, dadurch gekennzeichnet, daß
- die mindestens eine Erregerspule (LF) und der mindestens eine magnetisch steuerbare Widerstand (RF) in einem als Topfkern ausgebildeten magnetischen Kreis (M) angeordnet sind, wobei
- die Erregerspule (LF) innerhalb des Topfkerns so angeordnet ist, daß in einem Luftspalt innerhalb des durch Topfkern und Erregerspule (LF) gebildeten magnetischen Kreises (M) der magnetisch steuerbare Widerstand (RF) isoliert anbringbar ist (Figur 7).

6. Schaltnetzgerät nach Anspruch 3, dadurch gekennzeichnet, daß
-der magnetisch steuerbare Widerstand (RF) durch Zwischenlagen (I) aus Glimmer oder glasfaserverstärktem Silikonkautschuk vom magnetischen Kreis isoliert ist.

7. Schaltnetzgerät nach einem der vorhergehenden Ansprüche, dadurch gekennzeichnet, daß
- der magnetisch steuerbare Widerstand (RF) als Scheibe ausgebildet ist und sich der eine Anschluß im Mittelpunkt (M) und der andere Anschluß am äußeren Umfang (U) der Scheibe befindet (Figur 8).

8. Schaltnetzgerät nach einem der vorhergehenden Ansprüche, dadurch gekennzeichnet, daß
-der magnetisch steuerbare Widerstand (RF) eine rechteckige Form hat, wobei
-zwischen den Anschlüssen senkrecht zur Stromrichtung und dem Magnetfeld gut leitende Streifen angebracht sind (Figur 9).

9. Schaltnetzgerät nach einem der vorhergehenden Ansprüche, dadurch gekennzeichnet, daß
- der Widerstandskörper des magnetisch steuerbaren Widerstandes (RF) aus einem Material hoher Elektronenbeweglichkeit, wie einer halbleitenden Verbindung von Elementen der III. und V. Gruppe des periodischen Systems, gebildet ist.

10. Schaltnetzgerät nach Anspruch 8 und 9, dadurch gekennzeichnet, daß
- das Material des Widerstandskörpers Indiumantimonid oder Galliumarsenid ist und daß
- als gut leitende Streifen Nickelantimonid-Nadeln eutektisch in einem Indiumantimonid-Körper abgeschieden worden sind (Figur 10).


**Claims**

1. A switch-mode power supply unit comprising:
- a recrifier circuit (GL) fed from the a.c. mains and having its output connected to a smoothing capacitor (C1);
- a transformer arrangement supplied with the rectified voltage (UT) at its input clock-controlled by a control circuit (ST), and which supplies the required output voltage (UA) at its output after having carried out a further rectification, and further comprising:
- a protective circuit (S) arranged between the a.c. mains and the rectifier circuit (GL) to limit the charging current for the smoothing capacitor; characterised in that:
- the protective circuit (S) consists of at least one series combination of at least one inductance (L1,L2; LF; LF1,LF2) and at least one magnetically-controllable resistor (RF; RF1,RF2);
- the or each series arrangement is arranged in the region of at least one of the a.c. mains terminals (KL1,KL2) or between the rectifier circuit (GL) and the capacitor (C1); and
- each magnetically-controllable resistor (RF; RF1,RF2) has its resistance value influenced by the magnetic field of the associated inductance (LF; LF1,LF2) contained in the same series combination.

2. A switch-mode power supply unit as claimed in Claim 1, characterised in that the inductance consists of at least one series combination composed, in the direction from the a.c. mains to the rectifier circuit (GL), of a first coil (L1,L2) and an exciter coil (LF; LF1,LF2) for the magnetically-controllable resistor (RF; RF1,RF2).

3. A switch-mode power supply unit as claimed in Claim 2, characterised in that:
- if the series combination is located in the region of only one a.c. mains terminal (KL1,KL2), a first coil (L2) is located in the region of the respective other terminal; and
- in the direction towards the rectifier circuit (GL), the series combination of the exciter coil (LF; LF1,LF2) and the magnetically-controllable resistor (RD; RF1,RF2) is preceded by a capacitor (C6) and is followed by a further capacitor (C7) between the wires of the protective circuit (S) (Fig. 5 and 6).

4. A switch-mode power supply unit as claimed in one of Claims 1 to 3, characterised in that:
- in the protective circuit (S), in the region of the a.c. mains terminals a series arrangement of two capacitors (C4, C5) bridges the two terminals, the common junction point of which is connected to a screen (AS) of a housing of the protective circuit (S) and to the protective conductor of the a.c. mains network.

5. A switch-mode power supply unit as claimed in one of the preceding Claims, characterised in that:
- the minimum of one exciter coil (LF) and the minimum of one magnetically-controllable resistor (RF) are arranged in a magnetic circuit (M) which consists of a pot core; and
- the exciter coil (LF) is arranged in the pot core such that the magnetically-controllable resistor (RF) can be arranged in insulated fashion in an air gap inside the magnetic circuit (M) formed by the pot core and the exciter coil (LF) (Fig. 7).

6. A switch-mode power supply unit as claimed in Claim 5, characterised in that:
- the magnetically-controllable resistor (RF) is insulated from the magnetic circuit by intermediate layers (I) of mica or glassfibre reinforced silicone rubber.

7. A switch-mode power supply unit as claimed in one of the preceding Claims, characterised in that:
- the magnetically-controllable resistor (RF) is in the form of a disc, with one terminal located at the centre (M) of the disc and the other terminal located at the disc's outer periphery (U)(Fig. 8).

8. A switch-mode power supply unit as claimed in one of the preceding Claims, characterised in that:
- the magnetically-controllable resistor (RF) is of rectangular formation; and
- highly conductive strips are arranged between the terminals at right angles to the current direction and to the magnetic field (Fig. 9).

9. A switch-mode power supply unit as claimed in one of the preceding Claims, characterised in that:
- the resistive body of the magnetically-controllable resistor (RF) consists of a material which has a high level of electron mobility, such as a semiconductor compound of elements from Groups III and V of the periodic table.

10. A switch-mode power supply unit as claimed in Claim 8 and 9, <u>characterised in that</u>:
- the material of the resistive body consists of indium antimonide or gallium arsenide; and
- the highly-conductive strips consist of nickel antimonide needles eutectically deposited in an indium antimonide body (Fig. 10).

**Revendications**

1. Bloc d'alimentation comportant:
- un circuit redresseur (GL) alimenté par le réseau à tension alternative et en aval duquel est branché un condensateur de lissage (C1),
- un dispositif à transformateur, dont le côté entrée reçoit la tension redressée (UT) commandée de façon cadencée par un circuit de commande (ST) et dont le côté sortie délivre, après un nouveau redressement, la tension de sortie (UA) requise, et
- un circuit de protection (S) qui est disposé entre le réseau à tension alternative et le circuit redresseur (GL) et sert à limiter le courant de charge pour le condensateur de lissage, caractérisé par le fait que
- le circuit de protection (S) est constitué par au moins un circuit série formé d'au moins une inductance (L1, L2; LF; LF1, LF2) et d'au moins une résistance (RF; RF1, RF2) pouvant être commandée par voie magnétique, et
- ce circuit série est disposé au voisinage d'au moins l'une des bornes (KL1, KL2) du réseau à tension alternative ou entre le circuit redresseur (GL) et le condensateur (C1), et que
- la valeur de la résistance (RF, RF1, RF2), qui peut être commandée par voie magnétique, peut être influencée par le champ magnétique de l'inductance (LF, LF1, LF2) située dans le même circuit série.

2. Bloc d'alimentation suivant la revendication 1, caractérisé par le fait que
- l'inductance est constituée par au moins un circuit série, qui est formé, dans le sens allant du réseau de tension alternative au circuit redresseur (GL), par une première bobine (L1, L2) et par une bobine d'excitation (LF; LF1, LF2) pour la résistance (RF, RF1, RF2) pouvant être commandée par voie magnétique.

3. Bloc d'alimentation suivant la revendication 2, caractérisé par le fait que
- également dans le cas où le circuit série est disposé uniquement au voisinage d'une borne (KL1, KL2) du réseau à tension alternative, une première bobine (L2) est également située au voisinage de l'autre borne, et que
- dans le sens aboutissant au circuit redresseur (GL), un condensateur (C6) est branché en amont du circuit série formé de la bobine d'excitation (LF; LF1, LF2) et de la résistance (RF; RF1, RF2) pouvant être commandée par voie magnétique, et qu'un autre condensateur (C7) est branché en aval de ce circuit série entre les conducteurs du circuit de protection (S) (figures 5 et 6).

4. Bloc d'alimentation suivant l'une des revendications 1 à 3, caractérisé par le fait que
- dans le circuit de protection (S), et au voisinage des bornes du réseau à tension alternative, un circuit série formé de deux condensateurs (C4, C5), dont le point de liaison commun est raccordé à un blindage (AS) d'un boîtier du circuit de protection (S) ou au conducteur neutre du réseau à tension alternative, shunte les deux bornes.

5. Bloc d'alimentation suivant l'une des revendications précédentes, caractérisé par le fait que
- au moins une bobine d'excitation (LF) et au moins la résistance (RF) pouvant être commandée par voie magnétique sont disposées dans un circuit magnétique (M) réalisé sous la forme d'un noyau en forme de pot, auquel cas
- la bobine d'excitation (LF) est disposée à l'intérieur du noyau en forme de pot de telle sorte que la résistancé (RF) pouvant être commandée par voie magnétique peut être montée de façon isolée dans un entrefer à l'intérieur du circuit magnétique (M) formé par le noyau en forme de pot et la bobine d'excitation (LF) (figure 7).

6. Bloc d'alimentation selon la revendication 5, caractérisé par le fait que
- la résistance (RF) pouvant être commandée par voie magnétique est isolée du circuit magnétique par des couches intercalaires (I) formées de mica ou de caoutchouc au silicone renforcé par des fibres de verre.

7. Bloc d'alimentation suivant l'une des revendications précédentes, caractérisé par le fait que
- la résistance (RF) pouvant être commandée par voie magnétique est réalisée sous la forme d'un disque et qu'une borne est située au niveau du point médian (M) et que l'autre borne est situéé sur le pourtour extérieur (U) du disque (figure 8).

8. Bloc d'alimentation suivant l'une des revendications précédentes, caractérisé par le fait que
- la résistance (RF) pouvant être commandée par voie magnétique possède une forme rectangulaire, auquel cas
- des bandes fournissant une bonne conduction sont disposées entre les bornes, perpendiculairement au sens du courant et au champ magnétique (figure 9).

9. Bloc d'alimentation suivant l'une des revendications précédentes, caractérisé par le fait que
- le corps de la résistance (RF) pouvant être commandée par voie magnétique est réalisé en un matériau dans lequel la mobilité des électrons est élevée, comme par exemple une combinaison semiconductrice formée d'éléments des groupes III et V de la classification périodique.

10. Bloc d'alimentation suivant les revendications 8 et 9, caractérisé par le fait que

- le matériau du corps de la résistance est de l'antimoniure d'indium ou de l'arseniure de galium, et que
- en tant que bandes fournissant une bonne conduction, on a déposé des aiguilles d'antimoniure de nickel par voie eutectique dans un corps d'antimoniure d'indium (figure 10).

FIG 1

FIG 2

FIG 3

FIG 4

FIG 5

FIG 6

FIG 7

FIG 8

FIG 9

FIG 10